# EUROPÄISCHE PATENTSCHRIFT

(11) **EP 0 548 599 B1**
(45) Veröffentlichungstag und Bekanntmachung des Hinweises auf die Patenterteilung: **21.06.1995**
(21) Anmeldenummer: 92120455.8
(22) Anmeldetag: 01.12.1992
(51) Int. Cl.: C01B 33/36

(54) **Verfahren zur Herstellung von kristallinen Natriumdisilikaten**
Method for preparation of crystalline sodium disilicates
Procédé de préparation de disilicates de sodium cristallins

(30) Priorität: 21.12.1991 DE 4142711
(43) Veröffentlichungstag der Anmeldung: 30.06.1993
(73) Patentinhaber: HOECHST AKTIENGESELLSCHAFT, 65926 Frankfurt am Main (DE)
(72) Erfinder: Kotzian, Michael, Dr., W-5042 Erftstadt 18 (DE); Schimmel, Günther, Dr., W-5042 Erftstadt (DE); Tapper, Alexander, Dr., W-4050 Mönchengladbach (DE); Bauer, Knut,, W-6233 Kelkheim-Hornau (DE)

(56) Entgegenhaltungen:
- EP-A- 0 293 640
- EP-A- 0 425 428
- EP-A- 0 502 325

## Beschreibung

Die vorliegende Erfindung betrifft ein Verfahren zur Herstellung von kristallinen Natriumdisilikaten mit Schichtstruktur, einem Molverhältnis von SiO₂ zu Na₂O von (1,9 bis 2,1) : 1 und einem Wassergehalt von weniger als 0,3 Gewichts-% aus einer durch Umsetzung von Sand mit Natronlauge im Molverhältnis SiO₂ zu Na₂O von (2,0 bis 2,3) : 1 bei Temperaturen von 180 bis 240°C und Drucken von 10 bis 30 bar gewonnenen Wasserglaslösung mit mindestens 20 Gewichts-% Feststoff und Sprühtrocknen der Wasserglaslösung mit Heißluft von 200 bis 300°C unter Bildung eines pulverförmigen amorphen Natriumdisilikates mit einem Wassergehalt (ermittelt als Glühverlust bei 700°C) von 15 bis 23 Gewichts-% und einem Schüttgewicht von mehr als 300 g/l.

Aus der DE-OS 40 31 848 ist ein Verfahren zur Herstellung von kristallinen Natriumsilikaten mit Schichtstruktur, einem Molverhältnis von SiO₂ zu Na₂O von (1,9 bis 2,1) : 1 und einem Wassergehalt von weniger als 0,3 Gewichts-% aus einer Wasserglaslösung mit mindestens 20 Gewichts-% Feststoff bekannt. Dabei gewinnt man die Wasserglaslösung durch Umsetzung von Quarzsand mit Natronlauge im Molverhältnis SiO₂ zu Na₂O von (2,0 bis 2,3) : 1 bei Temperaturen von 180 bis 240°C und Drucken von 10 bis 30 bar. Diese Wasserglaslösung behandelt man in einer Sprühtrocknungszone mit Heißluft von 200 bis 300°C unter Bildung eines pulverförmigen amorphen Natriumsilikates mit einem Wassergehalt (ermittelt als Glühverlust bei 700°C) von 15 bis 23 Gewichts-% und einem Schüttgewicht von mehr als 300 g/l. Das pulverförmige, amorphe, wasserhaltige Natriumsilikat bringt man in einen geneigt angeordneten, mit Einrichtungen zur Bewegung von Feststoff ausgerüsteten Drehrohrofen ein und behandelt es darin mit Rauchgas bei Temperaturen von mehr als 500 bis 850°C 1 bis 60 Minuten im Gegenstrom unter Bildung von kristallinem Natriumsilikat. Schließlich zerkleinert man das aus dem direkt beheizten Drehrohrofen austretende kristalline Natriumsilikat mit Hilfe eines mechanischen Brechers auf Korngrößen von 0,1 bis 12 mm.

Nachteilig ist bei dem bekannten Verfahren die schwierige Einstellung eines reproduzierbaren Temperaturprofiles im Drehrohrofen wegen der Schwankungen des Rauchgases im Hinblick auf seine Menge je Zeiteinheit und seine Temperatur, wodurch kristallines Natriumdisilikat von unterschiedlicher Qualität anfällt.

Es ist daher Aufgabe der vorliegenden Erfindung, ein Verfahren zur Herstellung von kristallinen Natriumdisilikaten anzugeben, bei welchem über einen längeren Zeitraum Natriumdisilikat von gleichmäßiger Qualität erhalten wird. Das wird erfindungsgemäß dadurch erreicht, daß man das sprühgetrocknete pulverförmige, amorphe Natriumdisilikat aufmahlt; daß man das aufgemahlene Natriumdisilikat in einen mit Einrichtungen zur Bewegung von Feststoff ausgerüsteten, von außen über die Wand beheizten und in seinem Innenraum mehrere verschiedene Temperaturzonen aufweisenden Drehrohrofen einbringt und darin bei Temperaturen von 400 bis 800°C 1 bis 60 Minuten unter Bildung von kristallinem Natriumdisilikat behandelt.

Das Verfahren gemäß der Erfindung kann weiterhin wahlweise auch dadurch ausgestaltet sein, daß
a) man das sprühgetrocknete, pulverförmige, amorphe Natriumdisilikat auf Korngrößen von 1 bis 50 »m aufmahlt;
b) man das aus dem Drehrohrofen austretende pulverförmige kristalline Natriumdisilikat mit Korngrößen von 0,1 bis 12 mm unter Verwendung einer Mühle auf Korngrößen von 2 bis 400 »m mahlt;
c) man das gemahlene kristalline Natriumdisilikat einem Walzenkompaktierer zuführt, durch welchen es bei einem Walzenpreßdruck von 5 bis 40 kN/cm Walzenbreite zu kompakten Teilen verpreßt wird;
d) man die kompakten Teile durch mechanisches Zerkleinern zu einem Granulat mit einem Schüttgewicht von 700 bis 1000 g/l verarbeitet;
e) der von außen über die Wand beheizte Drehrohrofen in seinem Innenraum mindestens vier verschiedene Temperaturzonen aufweist;
f) in der ersten, der Eintragsöffnung benachbarten Temperaturzone 200 bis 500°C, in der zweiten Temperaturzone 400 bis 600°C, in der dritten Temperaturzone 550 bis 700°C und in der vierten, der Austragsöffnung benachbarten Temperaturzone 650 bis 800°C aufrechterhalten werden.

Beim erfindungsgemäßen Verfahren wird durch die Beheizung des Drehrohrofens von außen über seine Wand (sog. indirekte Beheizung) bei besserer Energieausnutzung ein gleichmäßiger Übergang der Wärme über die Wand in das Natriumdisilikat erreicht.

Die Temperaturführung über die Ofenlänge, d.h. das Temperaturprofil, kann beim Verfahren gemäß der Erfindung durch mehrere, voneinander unabhängige Brennkammern genau festgelegt werden, ohne die Gasgeschwindigkeit im Drehrohrofen zu verändern. Dadurch ist es möglich, den Temperaturbereich, in welchem δ-Na₂Si₂O₅ gebildet wird, genauer einzustellen und konstant zu halten, so daß die Gefahr der Herstellung von unerwünschtem α-Na₂Si₂O₅ minimiert wird.

Da beim erfindungsgemäßen Verfahren kein Rauchgas durch den Reaktionsraum des Drehrohrofens geleitet wird, ist die Gasgeschwindigkeit in diesem Raum wesentlich geringer, wodurch nur eine geringe Staubmenge aus dem Drehrohrofen ausgetragen wird.

Beim Verfahren gemäß der Erfindung können die bei der Beheizung des Drehrohrofens von außen über seine Wand anfallenden, etwa 700°C heißen Abgase, da sie keinerlei Staub enthalten, genutzt werden, beispielsweise zum Trocknen der Wasserglaslösung im Sprühturm.

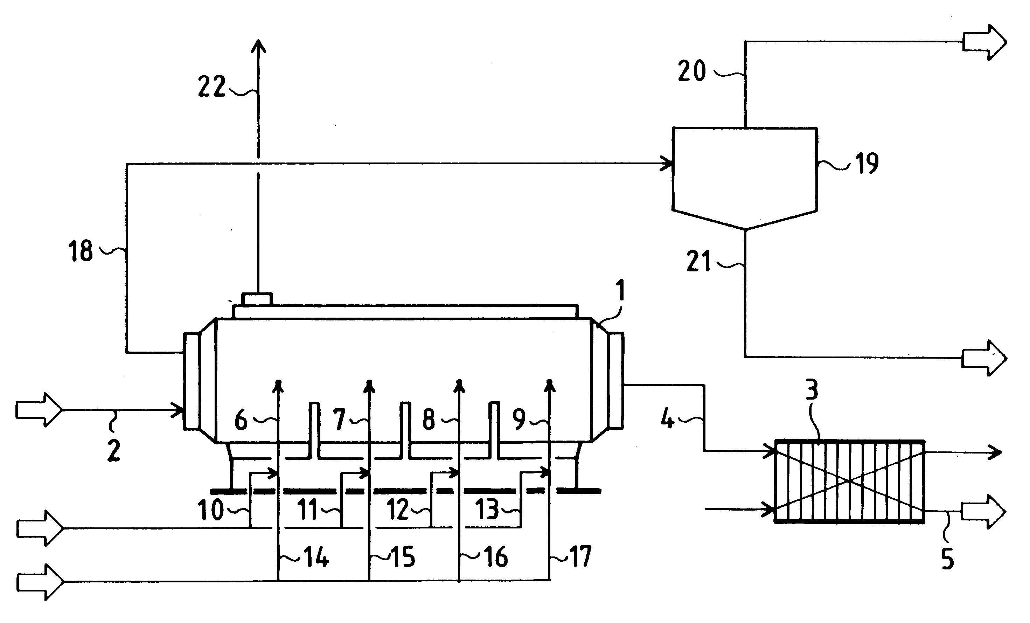

In der beigefügten Zeichnung ist eine Anlage zur Durchführung des erfindungsgemäßen Verfahrens schematisch und im Schnitt dargestellt.

In einen von außen über seine Wand beheizten Drehrohrofen 1 wird über eine Zuführungsleitung 2 sprühgetrocknetes, pulverförmiges, amorphes Natriumdisilikat eingetragen, während am entgegengesetzten Ende des Drehrohrofens 1 eine zu einem Kühler 3 führende Austragsleitung 4 für kristallines Natriumdisilikat abgeht, wobei der Kühler 3 mit einer Abfülleitung 5 für Fertiggut versehen ist. Der Doppelmantel des Drehrohrofens 1 ist in mehrere Kammern unterteilt, in welche je ein Heizgasrohr (6, 7, 8, 9) einmündet. Dabei ist jedes Heizgasrohr (6, 7, 8, 9) mit einem Luftzuführungsrohr (10, 11, 12, 13) und einem Brennstoffzuführungsrohr (14, 15, 16, 17) verbunden, wodurch die Heizgastemperatur für jede Kammer des Doppelmantels des Drehrohrofens 1 getrennt einstellbar ist.

Von der Seite des Drehrohrofens 1, in welche die Zuführungsleitung 2 einmündet, geht eine Fortgasleitung 18 ab, die in einen Wäscher 19 einmündet, der über eine erste Leitung 20 mit einem Abgassystem und über eine zweite Leitung 21 mit einer Abwasseraufarbeitungsanlage verbunden ist. Schließlich geht von der Oberseite des Drehrohrofens 1 eine Abgasleitung 22 ab, die beispielsweise zu einem Sprühturm führen kann.

### Beispiel 1 (nach dem Stand der Technik)

In einen mit Nickel ausgekleideten, zylindrischen Autoklaven mit Rühreinrichtung wurden Sand (99 Gewichts-% SiO₂; Körnung: 90 % < 0,5 mm) und 50 gewichts-%ige Natronlauge im molaren Verhältnis von SiO₂ zu Na₂O von 2,15 : 1 eingefüllt. Die Mischung wurde bei gerührtem Autoklaven durch Aufpressen von Wasserdampf (16 bar) auf 200°C erhitzt und 60 Minuten bei dieser Temperatur gehalten. Dann wurde der Inhalt des Autoklaven über ein Ausdampfgefäß in einen Behälter entspannt und nach Zusatz von 0,3 Gewichts-% Perlit als Filterhilfsmittel bei 90°C zur Abscheidung des Unlöslichen über ein Scheibendruckfilter filtriert. Als Filtrat wurde eine klare Wasserglaslösung mit einem molaren Verhältnis von SiO₂ zu Na₂O von 2,04 : 1 erhalten. Durch Verdünnen mit Wasser wurde ein Feststoffgehalt von 45 % eingestellt.

In einen mit einem Scheibenzerstäuber ausgerüsteten Heißluftsprühturm, welcher über eine gasbefeuerte Brennkammer beheizt wurde und mit einem pneumatisch abreinigenden Schlauchfilter zur Produktabscheidung verbunden war, wurde die Wasserglaslösung versprüht, wobei die Brennkammer so eingestellt war, daß das am Turmkopf eintretende heiße Gas eine Temperatur von 260°C aufwies.Die Menge der zu versprühenden Wasserglaslösung wurde so eingestellt, daß die Temperatur des den Sprühturm verlassenden Silikat-Gas-Gemisches 105°C betrug. Aus dem Volumen des Sprühturmes und aus dem Gasdurchsatz durch den Sprühturm wurde die Verweilzeit zu 16 Sekunden berechnet. Das am Schlauchfilter abgeschiedene amorphe Natriumdisilikat wies bei geringer Staubneigung ein Schüttgewicht von 480 g/l, einen Eisengehalt von 0,01 Gewichts-%, ein SiO₂ : Na₂O-Verhältnis von 2,04 : 1 und einen Glühverlust bei 700°C von 19,4 % auf; sein mittlerer Teilchendurchmesser betrug 52 »m.

In einen direkt befeuerten Drehrohrofen (Länge: 5 m; Durchmesser: 78 cm; Neigung: 1,2°), welcher mit mehrlagiger Mineralwolle und einem Blechmantel derart isoliert war, daß bei einer Temperatur im Inneren des Drehrohrofens von 730°C an seiner Außenhaut eine Temperatur von maximal 54°C auftrat, wurden stündlich 60 kg des amorphen Natriumdisilikates eingetragen. Das den Drehrohrofen verlassende kristalline Natriumdisilikat, welches 15 Gewichts-% α-Na₂Si₂O₅ enthielt und einen Wassergehalt (ermittelt als Glühverlust bei 700°C) von 0,1 Gewichts-% aufwies, wurde mit Hilfe eines mechanischen Brechers auf eine Körnung von weniger als 6 mm zerkleinert und nach einer Zwischenkühlung auf einer Scheibenmühle (Durchmesser: 30 cm) bei 400 min⁻¹ auf einen mittleren Teilchendurchmesser von 110 »m gemahlen, wobei der Eisengehalt des gemahlenen Produktes mit dem des amorphen Natriumdisilikates identisch blieb.

Das Abgas des Drehrohrofens wurde im Eintragsbereich für das amorphe Natriumdisilikat abgesaugt und einem Waschturm zugeführt. Mit dem Abgas wurden stündlich 5 kg Natriumdisilikat ausgetragen.

### Beispiel 2 (gemäß der Erfindung)

Aus der Wasserglaslösung mit 45 % Feststoffgehalt wurde analog Beispiel 1 im Heißluftsprühturm amorphes Natriumdisilikat mit einem Wassergehalt (ermittelt als Glühverlust bei 700°C) von 19,0 % und einem Schüttgewicht von 420 g/l hergestellt, welches nach Mahlung mit Hilfe einer Luftstrahlmühle auf einen mittleren Korndurchmesser von 35 »m ein Schüttgewicht von 630 g/l aufwies.

In einen von außen über die Wand beheizten Drehrohrofen (Länge: 5,3 m; Durchmesser: 40 cm; Neigung: 5 mm/m ≙ 0,3°) wurden über eine Dosierschnecke 25 kg/h dieses gemahlenen amorphen Natriumdisilikates eingetragen, wobei die Temperaturen im Bereich der dem Eintrag benachbarten ersten Kammer (vergl. die Figur) 460°C, der zweiten Kammer 580°C, der dritten Kammer 650°C und schließlich im Bereich der dem Austrag benachbarten vierten Kammer 690°C betrugen. Dabei waren im Eintragsbereich derartige mechanische Einrichtungen zur Bewegung von Feststoff angeordnet, durch welche ein Anbacken von amorphem Natriumdisilikat in diesem Bereich der Innenwand des Drehrohrofens verhindert wurde. An anderen Teilen der Innenwand des Drehrohrofens sowie an seinen Transportorganen bildeten sich keine Anbackungen aus.

Das aus dem Drehrohrofen ausgetragene kristalline Natriumdisilikat enthielt nur 4 Gewichts-% α-Na₂Si₂O₅ und wies einen Wassergehalt (ermittelt als Glühverlust bei 700°C) von 0,1 Gewichts-% auf; seine Aufarbeitung erfolgte analog Beispiel 1 mit Brecher und Scheibenmühle.

### Beispiel 3 (gemäß der Erfindung)

Das gemäß Beispiel 2 erhaltene Produkt mit einem mittleren Teilchendurchmesser von 145 »m wurde mit Hilfe einer Fließbett-Gegenstrahlmühle mit eingebauter mechanischer Sichtvorrichtung weiter zerkleinert. In Abhängigkeit von der eingestellten Sichterdrehzahl erhielt man ein abriebfreies Natriumdisilikat mit einem mittleren Teilchendurchmesser von 2 bis 15 »m und einem Wassergehalt von 0,14 Gewichts-%, wobei die Schichtstruktur unverändert erhalten blieb.

### Beispiel 4 (gemäß der Erfindung)

Das gemäß Beispiel 2 erhaltene Produkt wurde mit Hilfe einer mit Porzellan ausgekleideten und mit Korundkugeln gefüllten Kugelmühle weiter zerkleinert. Es wurde ein abriebfreies Natriumdisilikat mit einem von der Mahldauer abhängigen mittleren Teilchendurchmesser von 5 bis 14 »m erhalten, wobei die Schichtstruktur unverändert erhalten blieb.

### Beispiel 5 (gemäß der Erfindung)

Das gemäß Beispiel 2 erhaltene Produkt wurde in einem Walzenkompaktierer mit einem Preßdruck der 5 cm breiten Kompaktierwalzen von 30 kN/cm Walzenbreite mit anschließender Zerkleinerung der Schulpe in einem Siebgranulator zu einem staubfreien Granulat mit einem mittleren Teilchendurchmesser von 750 »m, einem Schüttgewicht von 820 g/l und hoher Abriebfestigkeit verarbeitet.

Zur Bestimmung der Abriebfestigkeit wurden 50 g Granulat in einer Rollkugelmühle (Länge: 10 cm; Durchmesser: 11,5 cm; 8 Stahlkugeln mit 2 cm Durchmesser) 5 Minuten bei einer Drehzahl von 100 min⁻¹ behandelt.

Nach Durchführung des Abriebtestes betrug der mittlere Teilchendurchmesser noch 615 »m, was einer Abnahme um 18 % entspricht.

Das in der folgenden Tabelle angegebene Kalkbindevermögen der in den Beispielen erhaltenen kristallinen Natriumdisilikate wurde nach folgender Vorschrift ermittelt:
1 l destilliertes Wasser wurde mit CaCl₂-Lösung (entsprechend 300 mg CaO) versetzt, wodurch ein Wasser mit 30°d erhalten wurde.

Zu 1 l dieses Wassers, welches entweder auf 20 oder 60°C temperiert war, wurden 1 g des in den Beispielen erhaltenen kristallinen Natriumdisilikates sowie 0 bis 6 ml einer 1-molaren Glykokoll-Lösung (erhalten aus 75,1 g Glykokoll und 58,4 g NaCl, welche mit Wasser zu 1 l gelöst wurden) gegeben, wonach sich ein pH-Wert von 10,4 einstellte. Die Suspension wurde 30 Minuten bei der gewählten Temperatur (20 bzw. 60°C) gerührt, währenddessen der pH-Wert stabil blieb. Schließlich wurde abfiltriert und im Filtrat das in Lösung verbliebene Calcium komplexometrisch bestimmt. Durch Differenzbildung mit dem ursprünglichen Gehalt wurde das Kalkbindevermögen ermittelt.

**Tabelle**

| Kalkbindevermögen von Natriumdisilikaten bei pH 10,4 (in mg Ca/g Na₂Si₂O₅) | | |
|---|---|---|
| Beispiel | bei 20°C | bei 60°C |
| 1 | 82 | 132 |
| 2, 3, 4, 5 | 84 | 136 |

## Patentansprüche

1. Verfahren zur Herstellung von kristallinen Natriumdisilikaten mit Schichtstruktur, einem Molverhältnis von SiO₂ zu Na₂O von (1,9 bis 2,1) : 1 und einem Wassergehalt von weniger als 0,3 Gewichts-% aus einer durch Umsetzung von Sand mit Natronlauge im Molverhältnis SiO₂ zu Na₂O von (2,0 bis 2,3) : 1 bei Temperaturen von 180 bis 240°C und Drucken von 10 bis 30 bar gewonnenen Wasserglaslösung mit mindestens 20 Gewichts-% Feststoff und Sprühtrocknen der Wasserglaslösung mit Heißluft von 200 bis 300°C unter Bildung eines pulverförmigen amorphen Natriumdisilikates mit einem Wassergehalt (ermittelt als Glühverlust bei 700°C) von 15 bis 23 Gewichts-% und einem Schüttgewicht von mehr als 300 g/l, dadurch gekennzeichnet, daß man das sprühgetrocknete pulverförmige, amorphe Natriumdisilikat aufmahlt; daß man das aufgemahlene Natriumdisilikat in einen mit Einrichtungen zur Bewegung von Feststoff ausgerüsteten, von außen über die Wand beheizten und in seinem Innenraum mehrere verschiedene Temperaturzonen aufweisenden Drehrohrofen einbringt und darin bei Temperaturen von 400 bis 800°C 1 bis 60 Minuten unter Bildung von kristallinem Natriumdisilikat behandelt.

2. Verfahren nach Anspruch 1, dadurch gekennzeichnet, daß man das sprühgetrocknete, pulverförmige, amorphe Natriumdisilikat auf Korngrößen von 1 bis 50 »m aufmahlt.

3. Verfahren nach Anspruch 1 oder 2, dadurch gekennzeichnet, daß man das aus dem Drehrohrofen austretende pulverförmige kristalline Natriumdisilikat mit Korngrößen von 0,1 bis 12 mm unter Verwendung einer Mühle auf Korngrößen von 2 bis 400 »m mahlt.

4. Verfahren nach mindestens einem der Ansprüche 1 bis 3, dadurch gekennzeichnet, daß man das gemahlene kristalline Natriumdisilikat einem Walzenkompaktierer zuführt, durch welchen es bei einem Walzenpreßdruck von 5 bis 40 kN/cm Walzenbreite zu kompakten Teilen verpreßt wird.

5. Verfahren nach Anspruch 4, dadurch gekennzeichnet, daß man die kompakten Teile durch mechanisches Zerkleinern zu einem Granulat mit einem Schüttgewicht von 700 bis 1000 g/l verarbeitet.

6. Verfahren nach mindestens einem der Ansprüche 1 bis 5, dadurch gekennzeichnet, daß der von außen über die Wand beheizte Drehrohrofen in seinem Innenraum mindestens vier verschiedene Temperaturzonen aufweist.

7. Verfahren nach Anspruch 6, dadurch gekennzeichnet, daß in der ersten, der Eintragsöffnung benachbarten Temperaturzone 200 bis 500°C, in der zweiten Temperaturzone 400 bis 600°C, in der dritten Temperaturzone 550 bis 700°C und in der vierten, der Austragsöffnung benachbarten Temperaturzone 650 bis 800°C aufrechterhalten werden.

## Claims

1. A process for the preparation of crystalline sodium disilicates having a laminar structure, a molar ratio of SiO₂ to Na₂O of (1.9 to 2.1): 1 and a water content of less than 0.3% by weight from a water glass solution obtained by reacting sand with sodium hydroxide solution in a molar ratio of SiO₂ to Na₂O of (2.0 to 2.3) : 1 at temperatures of 180 to 240°C and pressures of 10 to 30 bar, having at least 20% by weight of solids and spray drying the water glass solution with hot air at 200 to 300°C with formation of a pulverulent amorphous sodium disilicate having a water content (determined as loss on heating at 700°C) of 15 to 23% by weight and a bulk density of more than 300 g/l, which comprises grinding the spray-dried pulverulent, amorphous sodium disilicate; introducing the ground sodium disilicate into a rotary kiln equipped with devices for moving solids, externally heated via the wall and having a plurality of different temperature zones in its interior and treating the ground sodium disilicate therein at temperatures of 400 to 800°C for 1 to 60 minutes with formation of crystalline sodium disilicate.

2. The process as claimed in claim 1, wherein the spray-dried, pulverulent, amorphous sodium disilicate is ground to particle sizes of 1 to 50 »m.

3. The process as claimed in claim 1 or 2, wherein the pulverulent crystalline sodium disilicate having particle sizes from 0.1 to 12 mm exiting the rotary kiln is ground using a mill to particle sizes of 2 to 400 »m.

4. The process as claimed in at least one of claims 1 to 3, wherein the ground crystalline sodium disilicate is fed to a roller compactor, by means of which it is compressed to compacted pieces at a roller pressure of 5 to 40 kN/cm of roller width.

5. The process as claimed in claim 4, wherein the compacted pieces are processed by mechanical comminution to give granules having a bulk density of 700 to 1000 g/l.

6. The process as claimed in at least one of claims 1 to 5, wherein the rotary kiln externally heated via the wall has at least four different temperature zones in its interior.

7. The process as claimed in claim 6, wherein in the first temperature zone adjacent to the entry opening 200 to 500°C is maintained, in the second temperature zone 400 to 600°C is maintained, in the third temperature zone 550 to 700°C is maintained and in the fourth temperature zone adjacent to the discharge opening 650 to 800°C is maintained.

## Revendications

1. Procédé pour la fabrication de disilicates de sodium cristallisés de structure lamellaire, d'un rapport molaire SiO₂/Na₂O de 1,9:1 à 2,1:1 et d'une teneur en eau de moins de 0,3 % en poids à partir d'une solution de verte soluble à au moins 20 % en poids de solides obtenue par réaction de sable avec la lessive de soude dans un rapport molaire SiO₂/Na₂O de 2,0:1 à 2,3:1 à des températures de 180 à 240°C et sous des pressions de 10 à 30 bar et par séchage par pulvérisation de la solution de verte soluble par l'air chaud à des températures de 200 à 300°C avec formation d'un disilicate de sodium amorphe pulvérulent d'une teneur en eau (déterminée comme perte au feu à 700°C) de 15 à 23 % en poids et d'une densité apparente de plus de 300 g/l, caractérisé en ce que l'on broie le disilicate de sodium amorphe pulvérulent séché par pulvérisation ; on introduit le silicate de sodium broyé dans un four tubulaire tournant, chauffé de l'extérieur à travers la paroi, muni de dispositifs pour la circulation de matières solides et présentant dans son espace intérieur plusieurs zones de températures différentes et on le traite dans celui-ci à des températures de 400 à 800°C pendant 1 à 60 min avec formation de disilicate de sodium cristallisé.

2. Procédé selon la revendication 1, caractérisé en ce qu'on broie le silicate de sodium amorphe pulvérulent séché par pulvérisation à des grosseurs de grains de 1 à 50 »m.

3. Procédé selon la revendication 1 ou 2, caractérisé en ce qu'on broie le disilicate de sodium cristallisé pulvérulent ayant des grosseurs de grains de 0,1 à 12 mm sortant du four tubulaire tournant à des grosseurs de grains de 2 à 400 »m en utilisant un broyeur.

4. Procédé selon l'une au moins des revendications 1 à 3, caractérisé en ce qu'on envoie le disilicate de sodium cristallisé broyé à un compresseur à cylindres à travers lequel il est pressé en comprimés à une pression de compression des cylindres de 5 à 40 kN/cm.

5. Procédé selon la revendication 4, caractérisé en ce qu'on transforme les comprimés par broyage mécanique en un granulat ayant une densité apparente de 700 à 1 000 g/l.

6. Procédé selon l'une au moins des revendications 1 à 5, caractérisé en ce que le four tubulaire tournant chauffé de l'extérieur à travers la paroi comprend dans son espace intérieur au moins quatre zones de températures différentes.

7. Procédé selon la revendication 6, caractérisé en ce qu'on maintient une température de 200 à 500°C dans la première zone de température, voisine de l'orifice d'admission, une température de 400 à 600°C dans la seconde zone de température, une température de 550 à 700°C dans la troisième zone de température et une température de 640 à 800°C dans la quatrième zone de température, voisine de l'orifice de sortie.
